# EUROPEAN PATENT SPECIFICATION

(11) **EP 1 317 129 B1**
(45) Date of publication and mention of the grant of the patent: **12.11.2008**
(21) Application number: 02026843.9
(22) Date of filing: 29.11.2002
(51) Int. Cl.: H04N 1/10

(54) **Drive mechanism for accurate image reading**
Antriebsmechanismus zum genauen Bildlesen
Mécanisme d'entraînement pour la lecture précise d'image

(30) Priority: 30.11.2001 JP 2001366793
(43) Date of publication of application: 04.06.2003
(73) Proprietor: Ricoh Company, Ltd., Tokyo 143-8555 (JP)
(72) Inventor: Sachiko, Nishikino, Oyama-shi, Tochigi (JP); Nagao, Yoshiaki, Yokohama-shi, Kanagawa (JP); Takuji, Takahashi, Yokohama-shi, Kanagawa (JP)
(74) Representative: Schwabe - Sandmair - Marx

(56) References cited:
- EP-A- 0 366 126
- EP-A- 0 602 015
- US-A- 4 965 638

## Description

### BACKGROUND OF THE INVENTION

### 1. Field of the Invention

The present invention generally relates to drive units and image reading apparatuses, and more particularly to a drive unit that drives a movable body with drive wires wound around drive pulleys, and an image reading apparatus that drives an optical system for image reading with the drive unit.

### 2. Description of the Related Art

Copiers, facsimile machines, and scanners include an image reading apparatus that reads the image of an original by scanning the original for exposure with a moving optical system. In such a case, the optical system includes first and second movable running bodies (carriages). The first running body carries a lamp that is a light source and a first mirror, and the second running body carries second and third mirrors. At the time of scanning the original, the first and second running bodies moves in the same direction with a speed ratio of 2 : 1 so that the image of the original is formed on the image-formation surface of a photoelectric conversion element with an optical path length being kept constant. The first and second running bodies are connected to drive wires wound around drive pulleys so that the first and second running bodies are moved by controlling the rotation of the pulleys.

In the image reading apparatus that drives the optical system with the drive wires, it is necessary to drive each of the running bodies at a constant speed in the image reading range of the original in order to maintain a constant magnification of the original. Therefore, it is required to minimize the run-out of the outside diameter of part of each pulley around which part the drive wire is wound. That is, it is required to prevent the outside diameter from differing at different axial positions as much as possible.

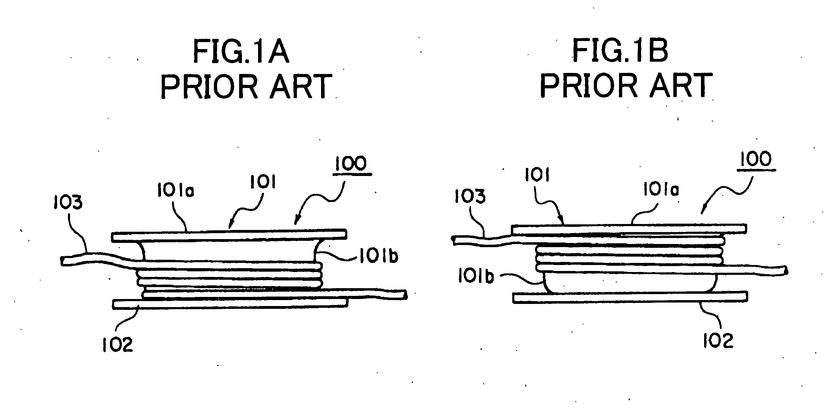

A description will be given, with reference to FIGS. 1A and 1B, of a conventional drive pulley. FIGS. 1A and 1B are diagrams each showing a conventional drive pulley 100 and a drive wire 103 wound around the drive pulley 100. FIG. 1A shows the position of the drive wire 103 at the start of driving, and FIG. 1B shows the position of the drive wire 103 when the optical system is moved to its fullest extent. The drive pulley 100 is composed of a dish-like member 101 having a flange 101a formed on its periphery by press working and a flat plate-like member 102 fixed to the bottom of the dish-like member 101. The drive wire 103 is wound around a cylindrical part 101b formed between the flange 101a and the bottom of the dish-like member 101. Press working, however, tends to cause a variation in the outside diameter of the cylindrical part 101b of the drive pulley 100 at both ends thereof in the axial or width directions (hereinafter those ends are referred to as axial ends) so that the outside diameter of the cylindrical part 101b is smaller on the bottom side and larger on the flange (101a) side than at the center. Accordingly, when the drive wire 103 is wound around the drive pulley 100 a plurality of times in one direction from the flat plate-like member (102) side without overlapping itself so as to be pulled out approximately from the center between the flange 101a and the flat plate-like member 102 at the start of driving as shown in FIG. 1A, the part of the drive wire 103 wound around the drive pulley 100 is shorter and the part of the drive wire 103 run out from the drive pulley 100 is longer since the outside diameter of the cylindrical part becomes smaller toward the flat plate-like member (102) side. On the other hand, when the optical system is moved to its fullest extent, the part of the drive wire 103 wound around the drive pulley 100 moves to the flange (101a) side as shown in FIG. 1B. Since the outside diameter of the cylindrical part becomes larger toward the flange (101a) side, the wound part of the drive wire 103 is longer in FIG. 1B than in FIG. 1A, and the run-out part of the drive wire 103 is shorter in FIG. 1B than in FIG. 1A. Since the wound part of the drive wire 103 differs in length at the axial center and the axial ends of the cylindrical part, the driving speed also changes depending on the position of the wound part of the drive wire 103, thus causing the disadvantage of the occurrence of magnification error. Further, the run-out part of the drive wire 103 also changes in length accordingly, which may cause slack in the drive wire 103 or a deviation in the position of the optical system. Accordingly, it is desirable not to employ the axial ends of the drive pulley for the driving operation.

In the case of providing allowance to both ends of the drive pulley, however, the drive pulley is increased in size, thus causing the entire drive unit to be increased in size. Therefore, in order to reduce the drive unit in size, it is necessary to minimize the region that is not used. Further, in order to ensure the non-use of the region that is not allowed to be used, error or variation in the position of the wound wire should also be considered. Thus, it is extremely difficult to prevent the drive unit from being increased in size.

Further, when the outside diameter of the drive pulley is not constant in its axial directions, the run-out part of the drive wire changes in length with the movement of the optical system if the drive wire is wound around the drive pulley so that the start and end points of wire winding are distant from each other in the width (axial) directions of the drive pulley. This changes the tension of the wire, thus causing variations in load and speed. Further, if the wire tension is totally lost, the wire comes off the drive pulley and driving backlash occurs. Moreover, the change of the length of the run-out part of the wire disrupts the relationship among the positions of optical components, thus preventing accurate reading of the original.

US-A-4,965,638 relates to a document scanner having a drive cable system constructed to provide desired alignment between the cables. The drive cables are wound around cylindrical drive members in a spiral fashion from two securing locations.

### SUMMARY OF THE INVENTION

Accordingly, it is a general object of the present invention to provide a drive unit and an image reading apparatus in which the foregoing disadvantages are eliminated.

A more specific object of the present invention is to provide a drive unit that can move a movable body for a predetermined amount with accuracy.

Another more specific object of the present invention is to provide an image reading apparatus that can move an optical system for reading the image of an original for a predetermined distance with accuracy.

The above objects of the present invention are achieved by a drive unit for moving movable bodies wherein a plurality of drive pulleys around which corresponding drive wires connected to the movable bodies are wound, the drive pulleys rotating to drive the drive wires so as to move the movable bodies and each of said drive pulleys has an axial length that allows the drive wire wound around a cylindrical part of the corresponding drive pulley to have an extra length on at least one end of the drive wire in addition to a length required to move the movable bodies, the extra length being equivalent to a 360° winding or more around the corresponding drive pulley, characterized in that the extra length of each of the drive wires covers a portion of the cylindrical part of the corresponding drive pulley in which portion an outside diameter of the corresponding drive pulley is non-uniform in its axial direction preventing the non-uniform portion of the cylindrical part from being used, wherein the drive wire is wound around the outside surface of the drive pulley from at least one axial end to the center thereof and a part of the drive wire which is run out from the drive pulley remains constant in length so that each of the movable bodies is driven at a constant speed.

The above objects of the present invention are also achieved by a drive unit for moving movable bodies (6,7), the drive unit characterized by a plurality of drive pulleys (15) around which corresponding drive wires (11) connected to the movable bodies (6,7) are wound, the drive pulleys (15) rotating to drive the drive wires (11) so as to move the movable bodies (6,7), the drive pulleys (15) each having first and second axial ends and having the corresponding drive wire (11) wound therearound from the first and second axial ends toward each other.

The above objects of the present invention are also achieved by a drive unit for moving movable bodies (6,7), the drive unit characterized by a plurality of drive pulleys (15) that rotate to drive corresponding drive wires (11) wound therearound and connected to the movable bodies (6,7) so that the movable bodies (6,7) are moved, the drive pulleys (15) each having an axial length such that an extra 360° winding or more of the drive wire (11) can be provided around at least one of first and second axial ends of the corresponding drive pulley (15) in addition to windings of the drive wire (11) around the corresponding drive pulley (15), the windings having a length required to move the movable bodies (6,7).

The above objects of the present invention are also achieved by a drive unit for moving movable bodies (6,7), the drive unit characterized by a plurality of means (15) for controlling movement of the movable bodies (6,7) by winding corresponding drive wires (11) wound around the means (15) and connected to the movable bodies (6,7) by the driving force of a motor, the means (15) each having an axial length such that the drive wire (11) wound around the corresponding means (15) has an extra length on at least one end thereof in addition to a length required to move the movable bodies (6,7), the extra length being equivalent to a 360° winding or more around the corresponding means (15).

The above objects of the present invention are also achieved by a drive unit for moving movable bodies (6,7), the drive unit characterized by a plurality of means (15) for controlling movement of the movable bodies (6,7) by winding corresponding drive wires (11) wound around the means (15) and connected to the movable bodies (6,7) by the driving force of a motor, the means (15) each having first and second axial ends and having the corresponding drive wire (11) wound therearound from the first and second axial ends toward each other.

The above objects of the present invention are also achieved by a drive unit for moving movable bodies (6,7), the drive unit characterized by a plurality of means (15) for controlling movement of the movable bodies (6,7) by winding corresponding drive wires (11) wound around the means (15) and connected to the movable bodies (6,7) by the driving force of a motor, the means (15) each having an axial length such that an extra 360° winding or more of the drive wire (11) can be provided around at least one of first and second axial ends of the corresponding means (15) in addition to windings of the drive wire (11) around the corresponding means (15), the windings having a length required to move the movable bodies (6,7).

According to any of the drive units of the present invention, the drive wire (11) can be prevented from being wound around the end parts of the drive pulley (15) where the outside diameter thereof is non-uniform, or there is no need to use the part of the drive wire (11) wound around the end parts of the drive pulley (15). Thereby, each of the movable bodies (6,7) can be driven at a constant speed.

The above objects of the present invention are further achieved by an image reading apparatus characterized by a drive unit of the present invention and an optical system including carriages (6,7) driven by the drive unit, the drive unit moving the carriages (6,7) so that an image of an original (10) is read.

According to the image reading apparatus of the present invention, the optical system for reading the image of the original (10) can be driven at a constant speed, so that the image can be read with accuracy.

### BRIEF DESCRIPTION OF THE DRAWINGS

Other objects, features and advantages of the present invention will become more apparent from the following detailed description when read in conjunction with the accompanying drawings, in which:
FIGS. 1A and 1B are diagrams showing states of a drive wire wound around a conventional drive pulley;
FIG. 2 is a sectional view of an image reading apparatus according to an embodiment of the present invention;
FIG. 3 is a perspective view of a drive mechanism of the image reading apparatus according to the embodiment of the present invention;
FIG. 4 is a perspective view of a drive shaft and drive pulleys attached thereto of the image reading apparatus according to the embodiment of the present invention;
FIGS. 5A through 5C are diagrams for illustrating the attachment of each of the drive pulleys to the drive shaft according to the embodiment of the present invention;
FIGS. 6A through 6D are diagrams for illustrating the relationship between the drive pulleys and drive wires according to the embodiment of the present invention; and
FIGS. 7A and 7B are diagrams for illustrating how to wind the drive wire around each of the drive pulleys according to the embodiment of the present invention.

### DETAILED DESCRIPTION OF THE PREFERRED EMBODIMENTS

A description will now be given, with reference to the accompanying drawings, of an embodiment of the present invention.

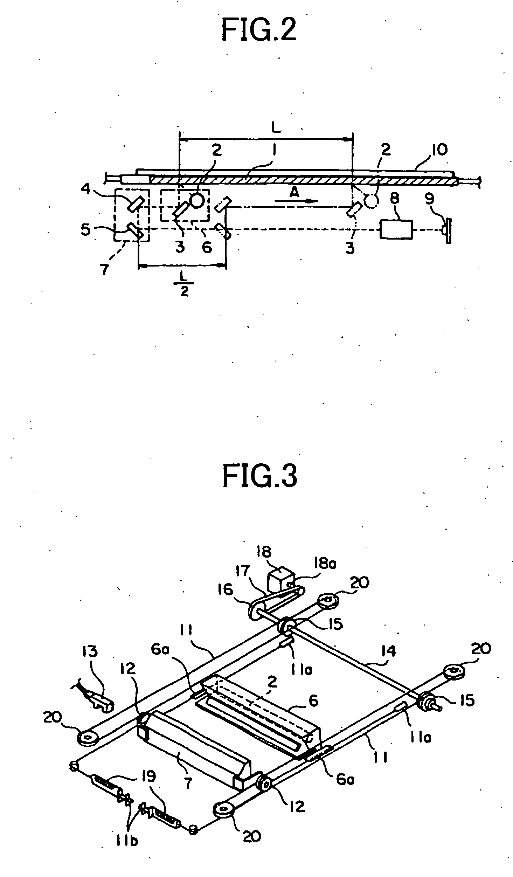

A description will first be given, with reference to FIGS. 2 and 3, of the configuration of an image reading apparatus according to the embodiment of the present invention. FIG. 2 is a sectional view of the image reading apparatus, schematically showing its configuration, and FIG. 3 is a perspective view of the drive mechanism of the image reading apparatus of FIG. 2.

As shown in FIG. 2, according to the image reading apparatus of the embodiment of the present invention, a light source lamp 2 emits light to an original 10 placed on a placement table 1 formed of a transparent flat-plate glass (contact glass). The reflected light from the original is reflected by a first mirror 3, a second mirror 4, and a third mirror 5 in the order described, and is collected by a lens 8 to be focused on a CCD 9. The lamp 2 and the first mirror 3 are provided to a first carriage 6, and the second and third mirrors 4 and 5 are provided to a second carriage 7. The first and second carriages 6 and 7 are provided so as to be movable along guide rails (not shown in the drawings) provided below the side parts of each of the first and second carriages 6 and 7. While the first carriage 6 travels a distance L, the second carriage 7 travels a distance L/2, thereby scanning the entire original 10 maintaining the optical path length of the lens 8 at a constant value.

The first carriage 6 is attached through wire clamps 6a to drive wires 11 that are positioned along the side parts of the first carriage 6 in its traveling directions. The drive wires 11 are wound around pulleys 12 that are provided on the side parts of the second carriage 7 in its traveling directions. The drive wires 11, which are positioned on both sides of each of the first and second carriages 6 and 7 in their traveling directions, are wound around two drive pulleys 15 a plurality of times, respectively, which drive pulleys 15 are provided at an interval to a drive shaft 14 positioned so as to orthogonally cross the traveling directions of the first and second carriages 6 and 7. A timing pulley 16 is provided to one end of the drive shaft 14. A timing belt 18 runs between the timing pulley 16 and a drive shaft 18a of a motor 18 that is a drive source so that the timing pulley 16 is driven by the motor 18. The motor 18 is formed of a stepper motor that can rotate in the forward and reverse directions. Each of the drive wires 11 has one end 11a thereof fixed to the main body (not shown in the drawing) of the apparatus and the other end 11b also fixed to the main body through a spring 19. The position to which the second carriage 7 is returned a predetermined distance after one end thereof passes a home position sensor 13 is determined to be a home position. The drive wires 11 are also engaged with fixed pulleys 20.

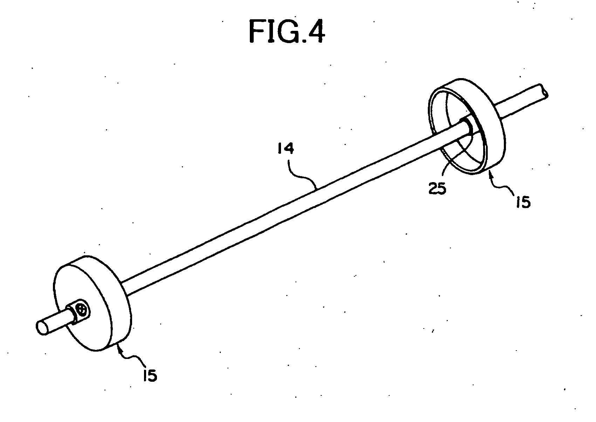

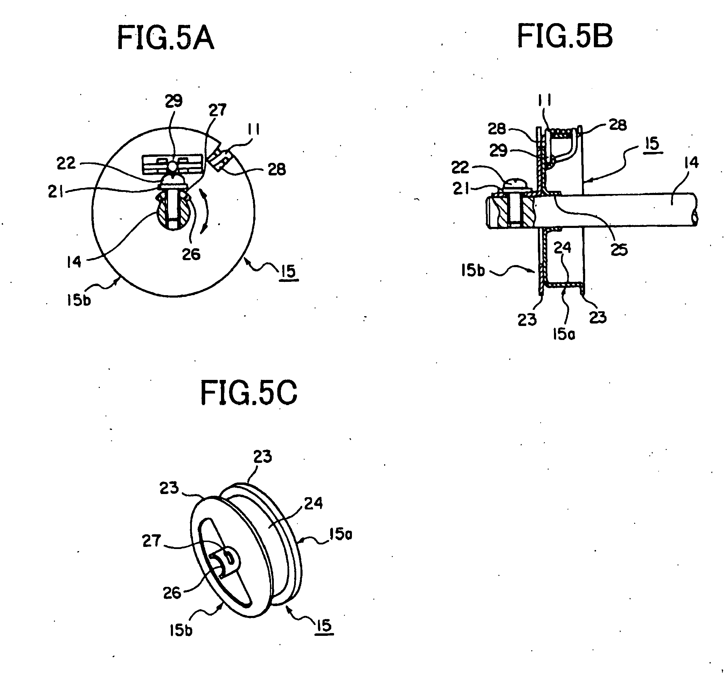

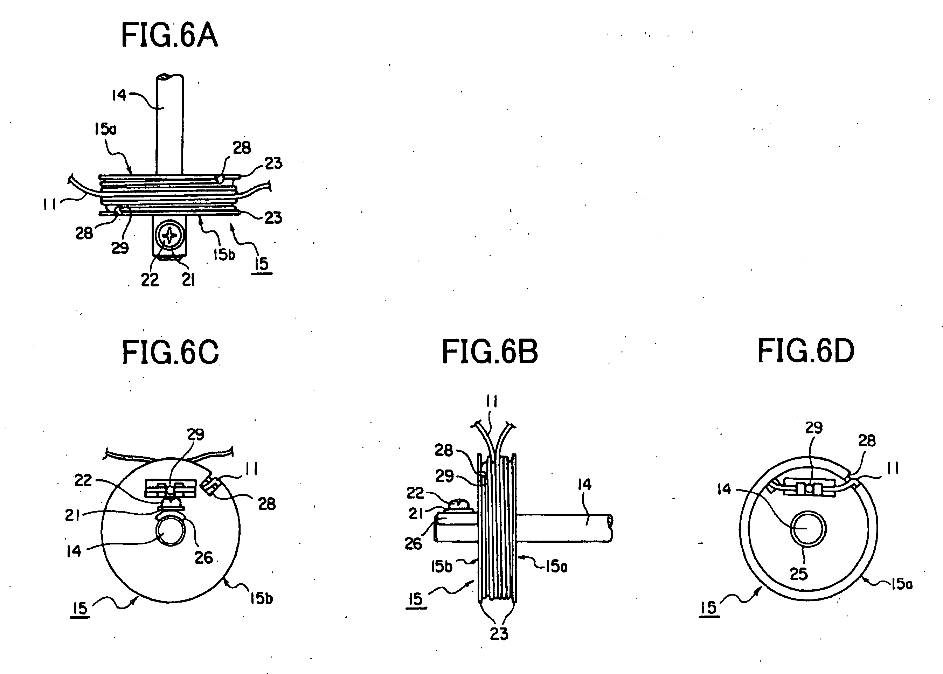

Next, a description will be given, with reference to FIGS. 4 through 6D, of the structures of the drive shaft 14 and the drive pulley 15 together with fixing of the drive wires 11. FIG. 4 is a perspective view of the drive shaft 14 with the drive pulleys 15. FIGS. 5A through 5C are diagrams for illustrating the attachment of each of the drive pulleys 15 to the drive shaft 14. FIG. 5A is a side view of the drive pulley 15 attached to the drive shaft 14. FIG. 5B is a sectional view of the drive pulley 15 and part of the drive shaft 14 to which part the drive pulley 15 is attached. FIG. 5C is a perspective view of the drive pulley 15. FIGS. 6A through 6D are diagrams for illustrating the relationship between the drive pulleys 15 and the drive wires 11. FIGS. 6A and 6B are a plan view and a front view, respectively, of the drive pulley 15 and the part of the drive shaft 14 to which the drive pulley 15 is attached. FIGS. 6C and 6D are outer and inner side views, respectively, of the attached drive pulley 15. Here, the outer side view refers to a side view obtained when the drive pulley 15 is viewed from the end of the drive shaft 14, and the inner side view refers to a side view obtained when the drive pulley 15 is viewed from the opposite side.

Each of the drive pulleys 15 is fastened to the drive shaft 14 with a screw 22 and a spring washer 21 provided thereunder. Each of the drive pulleys 15, which is formed of a steel plate, includes a dish-like part 15a shaped substantially like a dish and having a flange formed on its periphery by drawing and a flat plate-like part 15b whose diameter is substantially equal to the outside diameter of the flange of the dish-like part 15a. The bottom of the dish-like part 15a is bonded and fixed to the central part of the flat plate-like part 15b so that rims (flanges) 23 formed protrusively on both axial ends of each of the drive pulleys 15 and a cylindrical part 24 around which the drive wire 11 is wound is formed between the flanges 23 formed respectively by the flange of the dish-like part 15a and the outside periphery of the flat plate-like part 15b. The outside diameter of the cylindrical part 24 is smaller than that of each of the flanges 23. The drawing of the steel plate is performed by press working or rolling. The material of the drive pulleys 15 is not limited to steel plate, but may be metal or a synthetic resin as long as the material is a sheet material.

A sleeve-like shaft insertion part 25 is formed in the central part of the dish-like part 15a of each of the drive pulleys 15 so that the drive shaft 14 is press-fit into the opening of the shaft insertion part 25. In order to secure the positioning accuracy of the drive pulleys 15 and the drive shaft 14 by the shaft insertion part 25 of each of the drive pulleys 15, it is preferred that the drive pulleys 15 and the drive shaft 14 be formed in the same step. The coaxial accuracy of the inside diameter of each of the drive pulleys 15 for inserting the drive shaft 14 and the outside surface of each of the drive pulleys 15 around which surface the drive wire 11 is wound is thereby secured, which is most preferred in a high accuracy drive system. An opening is also formed in the central part of the flat plate-like part 15b of each of the drive pulleys 15 so that the drive shaft 14 is inserted into the opening. A screw reception part 26 is integrally formed on part of the periphery of the opening so as to protrude in the direction away from the dish-like part 15a. The screw reception part 26 is perforated with an elongated hole 27 so that the screw 22 is passed therethrough. The screw 22 is inserted protrusively through the elongated hole 27 into the drive shaft 14 to be fixed thereto.

A cutout 28 through which the drive wire 11 is passed is formed in the periphery of each of (the flange of) the dish-like part 15a and the flat plate-like part 15b. Further, an engagement part 29 that engages and holds the drive wire 11 is provided to the side face of each of the drive pulleys 15 for positioning the drive wire 11 and the drive pulley 15 relative to each other. The engagement part 29 may be formed by forming a cutout shape on the side face of each of the drive pulleys 15 of sheet material by press working or rolling. The engagement part 29 is not limited to a cutout, but may also be formed by drawing so as to engage and hold the drive wire 11.

The axial length, that is, the width of each of the drive pulleys 15 is determined so that a wire having an extra length equivalent to the circumference of the outside surface of the drive pulley 15 or greater in addition to a length required for moving the first and second carriages 6 and 7 to their respective predetermined positions can be wound around the drive pulley 15 without overlapping itself. That is, the drive wire 11 can be wound around the outside surface of each of the drive pulleys 15 an extra 360° or greater without overlapping itself besides being wound therearound for the length required for moving the first and second carriages 6 and 7 to their respective predetermined positions. The drive wire 11 is wound around the cylindrical part 24 of each of the drive pulleys 15 so that the rotation of the drive pulleys 15 drives the drive wires 11 to drive the first and second carriages 6 and 7.

The flanges 23 provided on the respective axial ends of the outside surface of each of the drive pulleys 15 serve as reference in winding the drive wire 11 around the outside surface of the drive pulley 15 and prevent the drive wire 11 from coming off the drive pulley 15 due to twisting or deviation of the drive wire 11 caused by the rotation of the drive pulley 15 at the time of winding the drive wire 11 around the drive pulleys 15, thereby increasing the efficiency of winding the drive wire 11. It is desirable that the flanges 23 be provided on the respective axial ends of the outside surface of each of the drive pulleys 15.

By providing the cutouts 28 to the flanges 23 formed on the axial ends of each of the drive pulleys 15, the drive wire 11 can be wound around the outside surface of the cylindrical part 24 of each of the drive pulleys 15 without running on the flanges 23, thereby improving the drive performance. This is because if the drive wire 11 is floating over the outside surface of the drive pulley 15, the floatation of the drive wire 11 creates drive noise in rotating the drive pulley 15, thus degrading drive performance.

Further, when each of the drive pulleys 15 has the dish-like part 15a having the flange 23 formed by drawing and bending sheet material, the sheet material is not drawn or bent at right angles at the boundary between the flange 23 and the cylindrical part 24 or at the boundary between the cylindrical part 24 and the bottom of the dish-like part 15a, thus forming round corners at those boundaries. Therefore, the diameter of the drive pulley 15, namely, the diameter of the cylindrical part 24, changes slightly at those drawn and bent parts. When the drive pulley 15 differs in diameter in its axial length, that is, in the width direction, the speed at which the drive wire 11 is sent out varies so as to prevent each of the first and second carriages (movable bodies) 6 and 7 from being driven at a constant speed.

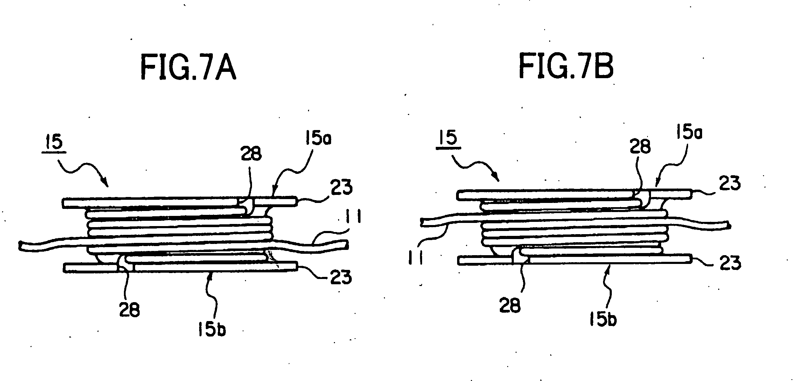

Therefore, according to the embodiment of the present invention, the drive wire 11 is wound around each of the drive pulleys 15 as shown in FIGS. 7A and 7B. FIGS. 7A and 7B are diagrams for illustrating how to wind the drive wire 11 around each of the drive pulleys 15. FIG. 7A shows the state of the drive pulley 15 at the start of driving, and FIG. 7B shows the state of the drive pulley 15 when the first and second carriages 6 and 7 are moved to their fullest extent. That is, by winding the drive wire 11 around the outside surface of the drive pulley 15 from both ends to the center thereof through the cutouts 28 provided to the flanges 23 formed on both ends of the outside surface of the drive pulley 15, the part of the drive wire 11 which part is wound around the drive pulley 15 is kept constant in length, so that the part of the drive wire 11 which part is run out from the drive pulley 15 also remains constant in length. That is, the wound part and the run-out part of the drive wire 11 can be adjacent to each other in the axial direction, so that each of the wound part and the run-out part of the drive wire 11 can be kept constant in length within the drive range even if the diameter of the drive pulley 15 is not uniform-in the axial direction. Thereby, each of the first and second carriages can be driven at a constant speed without having a positional deviation.

Further, at least one (360°) extra winding or more of the drive wire 11 around the drive pulley 15 is provided so as to make it unnecessary to use the part of the drive wire 11 which part is wound around the axial end parts of the cylindrical part 24 of the drive pulley 15 in which axial end parts the diameter of the drive pulley 15 is not constant. Thereby, it is ensured to prevent parts having different outside diameters from being used without assembly errors. Therefore, there is no need to increase the apparatus in size more than required.

For cost reduction as well as further downsizing, it is desirable that the extra winding be provided to the outside surface of the more frequently used one of the axial end parts of the cylindrical part 24 of the drive pulley 15 instead of being provided to both axial end parts. Thereby, the apparatus can be smaller in size and the drive wire 11 can be shorter in length, so that cost reduction can be realized. Particularly, in the image reading apparatus, the extra winding for 360° or more is provided so as to prevent the outermost part of the wound drive wire 11 from being used when the first and second carriages 6 and 7 are at the home position. When the portion of the cylindrical part 24 of the drive pulley 15 in which portion the outside diameter of the cylindrical part 24 is not uniform is wider than one winding of the drive wire 11, additional windings may be provided around the drive pulley 15 so that the non-uniform portion of the cylindrical part 24 is covered with the additional windings. Thereby, the non-uniform portion of the cylindrical part 24 can be prevented from being used, so that each of the first and second carriages 6 and 7 can be driven at a constant speed. Since the portion of the drive pulley 15 which portion is inhibited from being used can be masked with the drive wire 11, neither marking on the inhibited portion nor masking of the inhibited portion by another member is necessary, thus saving time and cost. Since the inhibited portion of the drive pulley 15 can be-masked with the drive wire 11 without any special mark on the inhibited portion, the efficiency and the reliability of assembling are increased.

Thus, according to the present invention, each of the drive pulleys 15 has an axial length such that the drive wire 11 wound around the drive pulley 15 has an extra length on at least one end thereof in addition to a length required to move the first and second carriages 6 and 7, the extra length being equivalent to a 360° winding or more around the drive pulley 15. Therefore, the drive wire 11 can be prevented from being wound around the end parts of the drive pulley 15 where the outside diameter thereof is non-uniform, or there is no need to use the part of the drive wire 11 wound around the end parts of the drive pulley 15. Thereby, each of the movable bodies 6 and 7 can be driven at a constant speed.

Further, in the image reading apparatus, the optical system for reading the image of the original can be driven at a constant speed, so that the image can be read with accuracy.

The present invention is not limited to the specifically disclosed embodiment, but variations and modifications may be made without departing from the scope of the present invention.

## Claims

1. A drive unit for moving movable bodies (6, 7), wherein
a plurality of drive pulleys (15) around which corresponding drive wires (11) connected to the movable bodies (6, 7) are wound, the drive pulleys' (15) rotating to drive the drive wires (11) so as to move the movable bodies (6, 7), and
each of said drive pulleys (15) has an axial length that allows the drive wire (11) wound around a cylindrical part (24) of the corresponding drive pulley (15) to have an extra length on at least one end of the drive wire (11) in addition to a length required to move the movable bodies (6, 7), the extra length being equivalent to a 360° winding or more around the corresponding drive pulley (15),
**characterized in that** the extra length of each of the drive wires (11) covers a portion of the cylindrical part (24) of the corresponding drive pulley (15) in which portion an outside diameter of the corresponding drive pulley (15) is non-uniform in its axial direction preventing the non-uniform portion of the cylindrical part from being used, wherein the drive wire (11) is wound around the outside surface of the drive pulley (15) from at least one axial end to the center thereof and a part of the drive wire (11) which is run out from the drive pulley (15) remains constant in length, so that each of the movable bodies (6, 7) is driven at a constant speed.

2. The drive unit as claimed in claim 1, **characterized in that** each of said drive pulleys (15) has first and second axial ends and has the corresponding drive wire (11) wound therearound from the first and second axial ends toward the second and first axial ends, respectively.

3. The drive unit as claimed in claim 2, **characterized in that** the extra length of the drive wire (11) is provided around one of the first and second axial ends of the corresponding drive pulley (15), the one of the first and second axial ends being located on one side of the corresponding drive pulley (15) which one side is more frequently used than the other side thereof to wind the drive wire (11) in moving the movable bodies (6, 7).

4. The drive unit as claimed in claim 2, **characterized in that**: said drive pulleys (15) are attached to a rotary drive shaft (14) so that the second axial ends of said drive pulleys (15) face each other; and
the extra length of the drive wire (11) is provided around the first axial end of each of said drive pulleys (15).

5. The drive unit as claimed in claim 1, **characterized in that** each of said drive pulleys (15) comprises cutouts (28) through which the drive wire (11) is wound around the corresponding drive pulleys (15).

6. The drive unit as claimed in claim 1, **characterized in that** the extra length of each of the drive wires (11) is prevented from being used in moving the movable bodies (6, 7).

7. The drive unit as claimed in any of claims 1 to 6, **characterized in that** said drive pulleys (15) are formed by press working.

8. The drive unit as claimed in claim 1, **characterized in that**:
the drive pulleys (15), driven by the driving force of a motor (18), control movement of the movable bodies (6, 7) by winding the corresponding drive wires (11), wound around the drive pulleys (15) and connected to the movable bodies (6, 7),

9. The drive unit as claimed in claim 1, **characterized in that** an engagement part (29) which engages with and holds the drive wire (11) is provided on the side face of each of the drive pulleys (15), for positioning the drive wire (11) and the drive pulley (15) relative to each other.

10. The drive unit as claimed in claim 1, **characterized in that** the extra length of each of the drive wires (11) prevents a portion of the corresponding drive pulley (15) in which portion an outside diameter of the corresponding drive pulley (15) is non-uniform from being used.

11. The drive unit as claimed in claim 5, **characterized in that** the drive wires (11) are wound around the corresponding drive pulleys (15) through the cutouts (28).

12. An image reading apparatus **characterized by**:
a drive unit as claimed in any of claims 1 to 11; and
an optical system comprising carriages (6, 7) driven by said drive unit,
said drive unit moving the carriages (6, 7) so that an image of an original (10) is read.

## Patentansprüche

1. Antriebseinheit zum Bewegen beweglicher Körper (6, 7), wobei
eine Vielzahl von Antriebsriemenscheiben (15), um welche entsprechende Antriebsdrähte (11), die mit den beweglichen Körpern (6, 7) verbunden sind, gewunden sind, wobei sich die Riemenscheiben (15) drehen, um die Antriebsdrähte (11) anzutreiben, um die beweglichen Körper (6, 7) zu bewegen, und
jede der Antriebsriemenscheiben (15) eine axiale Länge aufweist, die es den Antriebsdrähten (11) ermöglicht, um ein zylindrisches Teil (24) der entsprechenden Riemenscheibe (15) gewunden zu werden, um eine extra Länge an wenigstens einem Ende des Antriebsdrahts (11) aufzuweisen, zusätzlich zu einer Länge, die erforderlich ist, um die beweglichen Körper (6, 7) zu bewegen, wobei die extra Länge äquivalent zu einer 360° Windung oder mehr um die entsprechende Riemenscheibe (15) ist,
**dadurch gekennzeichnet, dass** die extra Länge der Antriebsleitungen (11) einen Abschnitt des zylindrischen Teils (24) der entsprechenden Riemenscheibe (15) abdeckt, in welchem Abschnitt ein Außenseitendurchmesser der entsprechenden Riemenscheibe (15) in seiner axialen Richtung nicht gleichförmig ist, was den nicht gleichförmigen Abschnitt des zylindrischen Teils davor bewahrt, verwendet zu werden, wobei der Antriebsdraht (11) um die Außenseitenoberfläche der Antriebsriemenscheibe (15) von wenigstens einem axialen Ende zu der Mitte hiervon gewunden ist, und ein Teil des Antriebsdrahts (11), welcher aus der Antriebsriemenscheibe (15) herausläuft, in seiner Länge konstant bleibt, sodass jeder der beweglichen Körper (6,7) mit einer konstanten Geschwindigkeit angetrieben wird.

2. Antriebseinheit nach Anspruch 1, **dadurch gekennzeichnet, dass** jede der Antriebsriemenscheiben (15) erste und zweite axiale Enden aufweist und weist den entsprechenden Antriebsdraht (11) jeweils von den ersten und zweiten axialen Enden in Richtung auf die zweiten und ersten axialen Enden dortherum gewunden auf.

3. Antriebseinheit nach Anspruch 2, **dadurch gekennzeichnet, dass** die extra Länge des Antriebsdrahts (11)entweder um das erste oder zweite axiale Ende der entsprechenden Riemenscheibe (15) herum bereitgestellt wird, wobei sich entweder das erste oder zweite axiale Ende auf einer Seite der entsprechenden Riemenscheibe (15) befindet, wobei eine Seite öfter verwendet wird als die andere Seite hiervon, um den Antriebsdraht (11) durch Bewegen der beweglichen Körper (6, 7) zu winden.

4. Antriebseinheit nach Anspruch 2, **dadurch gekennzeichnet, dass**: die Antriebsriemenscheiben (15) so an der Drehantriebswelle (14) angebracht ist, dass die zweiten axialen Enden der Antriebsriemenscheiben (15) einander gegenüberliegen; und
die extra Länge des Antriebsdrahts (11) um das erste axiale Ende von jeder der Antriebsriemenscheiben (15) bereitgestellt wird.

5. Antriebseinheit nach Anspruch 1, **dadurch gekennzeichnet, dass** jede der Antriebsriemenscheiben (15) Ausschnitte (28) umfasst, durch welche den Antriebsdraht (11) um die entsprechenden Antriebsriemenscheiben (15) gewunden ist.

6. Antriebseinheit nach Anspruch 1, **dadurch gekennzeichnet, dass** die extra Länge von jedem der Antriebsdrähte (11) davor bewahrt wird, verwendet zu werden, indem die beweglichen Körper (6, 7) bewegt werden.

7. Antriebseinheit nach irgendeinem der Ansprüche 1 bis 6, **dadurch gekennzeichnet, dass** die Antriebsriemenscheiben (15) durch Pressen ausgebildet werden.

8. Antriebseinheit nach Anspruch 1, **dadurch gekennzeichnet, dass**:
die Antriebsriemenscheiben (15), die durch die Antriebskraft eines Motors (18) angetrieben werden, eine Bewegung der beweglichen Körper (6, 7) steuern, indem die entsprechenden Antriebsdrähte (11) gewunden werden, die um die Riemenscheiben (15) gewunden sind und mit den beweglichen Körpern (6, 7) verbunden sind.

9. Antriebseinheit nach Anspruch 1, **dadurch gekennzeichnet, dass** ein Eingriffsglied (29), welches in den Antriebsdraht (11) eingreift und sie hält, auf der Seitenfläche von jeder der Antriebsriemenscheiben (15) bereitgestellt wird, um den Antriebsdraht (11) und die Antriebsriemenscheibe (15) relativ zueinander zu positionieren.

10. Antriebseinheit nach Anspruch 1, **dadurch gekennzeichnet, dass** die extra Länge von jedem der Antriebsdrähte (11) einen Abschnitt der entsprechenden Antriebsriemenscheibe (15) davor bewahrt, in welchem Abschnitt ein Außenseitendurchmesser der entsprechenden Antriebsriemenscheibe (15) nicht gleichförmig ist, verwendet zu werden.

11. Antriebseinheit nach Anspruch 5, **dadurch gekennzeichnet, dass** der Antriebsdraht (11) um die entsprechenden Antriebsriemenscheiben (15) durch die Ausschnitte (28) gewunden sind.

12. Bildleseapparat, **gekennzeichnet durch**:
eine Antriebseinheit nach irgendeinem der Ansprüche 1 bis 11; und
ein optisches System, das Träger (6, 7) umfasst, die **durch** die Antriebseinheit angetrieben werden,
wobei die Antriebseinheit die Träger (6, 7) so bewegt, dass ein Bild einer Vorlage (10) gelesen wird.

## Revendications

1. Unité d'entraînement pour déplacer des corps mobiles (6, 7), dans laquelle :
une pluralité de poulies d'entraînement (15) autour desquelles des fils d'entraînement correspondants (11) qui sont connectés aux corps mobiles (6, 7) sont enroulés, les poulies d'entraînement (15) tournant pour entraîner les fils d'entraînement (11) de manière à déplacer les corps mobiles (6, 7) ; et
chacune desdites poulies d'entraînement (15) présente une longueur axiale qui permet que le fil d'entraînement (11) qui est enroulé autour d'une partie cylindrique (24) de la poulie d'entraînement correspondante (15) présente une longueur supplémentaire sur au moins une extrémité du fil d'entraînement (11) en plus d'une longueur requise pour déplacer les corps mobiles (6, 7), la longueur supplémentaire étant équivalente à un enroulement de 360° ou plus autour de la poulie d'entraînement correspondante (15),
**caractérisée en ce que** la longueur supplémentaire de chacun des fils d'entraînement (11) couvre une partie de la partie cylindrique (24) de la poulie d'entraînement correspondante (15), partie dans laquelle un diamètre externe de la poulie d'entraînement correspondante (15) est non uniforme suivant sa direction axiale, ce qui empêche que la partie non uniforme de la partie cylindrique ne soit utilisée, où le fil d'entraînement (11) est enroulé autour de la surface externe de la poulie d'entraînement (15) depuis au moins une extrémité axiale jusqu'à son centre, et une partie du fil d'entraînement (11) qui est défilé depuis la poulie d'entraînement (15) reste de longueur constante de telle sorte que chacun des corps mobiles (6, 7) soit entraîné à une vitesse constante.

2. Unité d'entraînement selon la revendication 1,
**caractérisée en ce que** chacune desdites poulies d'entraînement (15) comporte des première et seconde extrémités axiales et dispose du fil d'entraînement correspondant (11) qui est enroulé autour depuis les première et seconde extrémités axiales en direction des seconde et première extrémités axiales, de façon respective.

3. Unité d'entraînement selon la revendication 2,
**caractérisée en ce que** la longueur supplémentaire du fil d'entraînement (11) est prévue autour de l'une des première et seconde extrémités axiales de la poulie d'entraînement correspondante (15), l'une des première et seconde extrémités axiales étant localisée sur un côté de la poulie d'entraînement correspondante (15), lequel côté considéré est plus fréquemment utilisé que l'autre côté afférent pour enrouler le fil d'entraînement (11) lors du déplacement des corps mobiles (6, 7).

4. Unité d'entraînement selon la revendication 2,
**caractérisée en ce que** lesdites poulies d'entraînement (15) sont fixées à un arbre d'entraînement tournant (14) de telle sorte que les secondes extrémités axiales desdites poulies d'entraînement (15) se fassent face l'une l'autre ; et
la longueur supplémentaire du fil d'entraînement (11) est prévue autour de la première extrémité axiale de chacune desdites poulies d'entraînement (15).

5. Unité d'entraînement selon la revendication 1,
**caractérisée en ce que** chacune desdites poulies d'entraînement (15) comprend des découpes (28) par l'intermédiaire desquelles le fil d'entraînement (11) est enroulé autour des poulies d'entraînement correspondantes (15).

6. Unité d'entraînement selon la revendication 1,
**caractérisée en ce que** la longueur supplémentaire de chacun des fils d'entraînement (11) est empêchée d'être utilisée lors du déplacement des corps mobiles (6, 7).

7. Unité d'entraînement selon l'une quelconque des revendications 1 à 6, **caractérisée en ce que** lesdites poulies d'entraînement (15) sont formées au moyen d'un travail à la presse.

8. Unité d'entraînement selon la revendication 1,
**caractérisée en ce que** :
les poulies d'entraînement (15), qui sont entraînées au moyen de la force d'entraînement d'un moteur (18), commandent le déplacement des corps mobiles (6, 7) en enroulant les fils d'entraînement correspondants (11) qui sont enroulés autour des poulies d'entraînement (15) et connectés aux corps mobiles (6, 7).

9. Unité d'entraînement selon la revendication 1,
**caractérisée en ce qu'**une partie d'engagement (29) qui s'engage avec le fil d'entraînement (11) et qui le maintient est prévue sur la face latérale de chacune des poulies d'entraînement (15) pour positionner le fil d'entraînement (11) et la poulie d'entraînement (15) l'un par rapport à l'autre.

10. Unité d'entraînement selon la revendication 1,
**caractérisée en ce que** la longueur supplémentaire de chacun des fils d'entraînement (11) empêche qu'une partie de la poulie d'entraînement correspondante (15), partie dans laquelle un diamètre externe de la poulie d'entraînement correspondante (15) est non uniforme, ne soit utilisée.

11. Unité d'entraînement selon la revendication 5,
**caractérisée en ce que** les fils d'entraînement (11) sont enroulés autour des poulies d'entraînement correspondantes (15) par l'intermédiaire des découpes (28).

12. Appareil de lecture d'image **caractérisé par** :
une unité d'entraînement selon l'une quelconque des revendications 1 à 11 ; et
un système optique comprenant des chariots (6, 7) qui sont entraînés au moyen de ladite unité d'entraînement,
ladite unité d'entraînement déplaçant les chariots (6, 7) de telle sorte qu'une image d'un original (10) soit lue.
